# EUROPEAN PATENT APPLICATION

(11) **EP 1 376 993 A2**
(43) Date of publication of application: **02.01.2004**
(21) Application number: 03014646.8
(22) Date of filing: 26.06.2003
(51) Int. Cl.: H04M 1/02

(54) **Portable communicating apparatus**

(30) Priority: 28.06.2002 JP 2002189048; 28.06.2002 JP 2002189049; 26.06.2003 JP 2003182737
(71) Applicant: Rohm Co., Ltd., Kyoto-shi Kyoto 615-8585 (JP)
(72) Inventor: Sawamura, Yo c/o Rohm Co., Ltd., Kyoto-shi, Kyoto 615-8585 (JP)
(74) Representative: Leson, Thomas Johannes Alois, Dipl.-Ing.

(57) **Abstract**

A display section A and a body section B including a CPU and serving to carry out a signal processing are connected to each other through a folding section C. The display section of a folding portable apparatus is provided with a display panel 2, a camera 3 and image processing means 27 for receiving photographed image data from the camera, carrying out an image processing and directly supplying display image data to the display section. In the case in which data including the image data are to be supplied from the body section to the display section or from the display section to the body section, a data transmitting/receiving function between the CPU and the image processing means is enabled.

## Description

### BACKGROUND OF THE INVENTION

### 1 .Field of the Invention

The present invention relates to a portable apparatus such as a folding portable telephone having a display section and a portable telephone for giving a notice of an incoming call in a plurality of different configurations at time of the arrival of an incoming call, or a communicating device such as a PDA.

### 2. Description of the Related Art

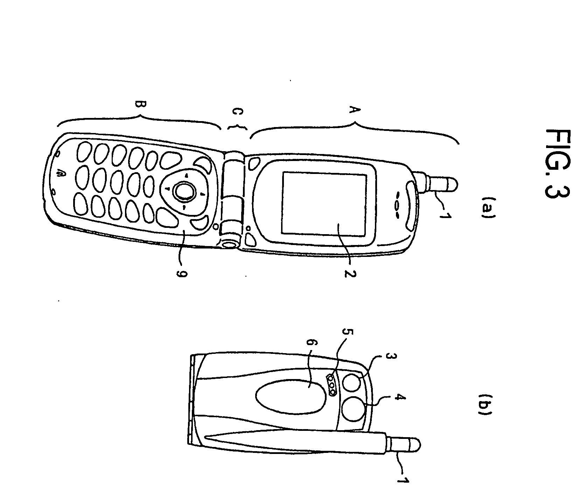

Fig. 3 is a view illustrating the appearance of a general folding portable telephone. Fig. 3(a) shows an opening state and Fig. 3(b) shows a folding state. The portable telephone is constituted by an LCD (liquid crystal display) panel side section A, a body section B, and a folding section C for foldably connecting them.

In the LCD panel side section A, a main LCD panel 2 is provided on the internal surface side thereof so as to be seen in an opening state, and an antenna 1, a high sensitivity mobile camera 3, a positioning mirror 4 to be a standard for including a photographing range in an image, an LED (light emitting diode) display 5 for displaying incoming call information, and a sub LCD panel 6 for displaying an incoming call, the receipt of a mail, a date and a time on the outer surface side thereof. Moreover, the body section B is provided with a key operating section 9.

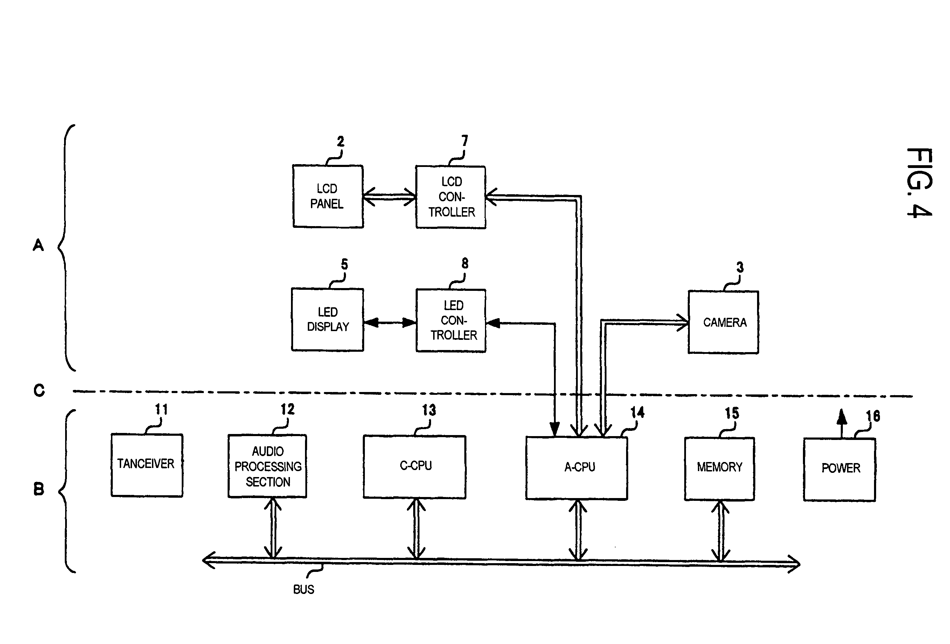

Fig. 4 is a block diagram showing the conventional structure of the folding portable telephone illustrated in Fig. 3.

In Fig. 4, the body section B comprises a transmitting/receiving section 11 for transmitting/receiving data through the antenna 1, an audio processing section 12 for processing a voice signal, a communication CPU 13 (hereinafter referred to as a C-CPU) for mainly processing the communicating function of the portable telephone, an application CPU (hereinafter referred to as an A-CPU) 14 for mainly carrying out the display processing of the LCD panels 2 and 6 and the LED display 5 and the processing of an image photographed by the camera 3, a memory 15, and a power source 16 for supplying a power to each component. Bus denotes a bus line. Moreover, the memory 15 has a volatile memory including a static RAM to function as a work memory, and a nonvolatile memory including a flash memory for storing fixed information such as a telephone number and a mail address.

The LCD panel side section A comprises an LCD controller 7 and an LED controller 8 together with the LCD panels 2 and 6, the camera 3 and the LED display 5. The sub LED panel 6 is not shown.

Description will be given to the internal structure of the conventional portable telephone. Between the body section B and the LCD panel side section A, a signal line for display data, address data and a control signal is provided between the A-CPU 14 and the LCD controller 7, a signal line for display data and a control signal (for example, a 3-line serial communicating method) is provided between the A-CPU 14 and the LED controller 8, and furthermore, a signal line for image data, synchronous data and a control signal (for example, 20 signal lines in total in case of 16-bit data) is provided between the A-CPU 14 and the camera 3. As a matter of course, moreover, a power line and a transmitting/receiving signal line are provided. In some cases, a signal line provided between the A-CPU 14 and the camera 3 or the LCD controller 7 is not directly connected to the A-CPU 14 but is connected to the A-CPU 14 through the bus line Bus.

Furthermore, there has also been known a portable telephone for giving a ring tone such as a ring melody when an incoming call arrives, causing an LCD (liquid crystal display) panel to display an incoming call, and giving a notice of the incoming call in a plurality of different configurations in which the light emission of an LED (light emitting diode) display for the incoming call is controlled or a vibrator is driven to be vibrated.

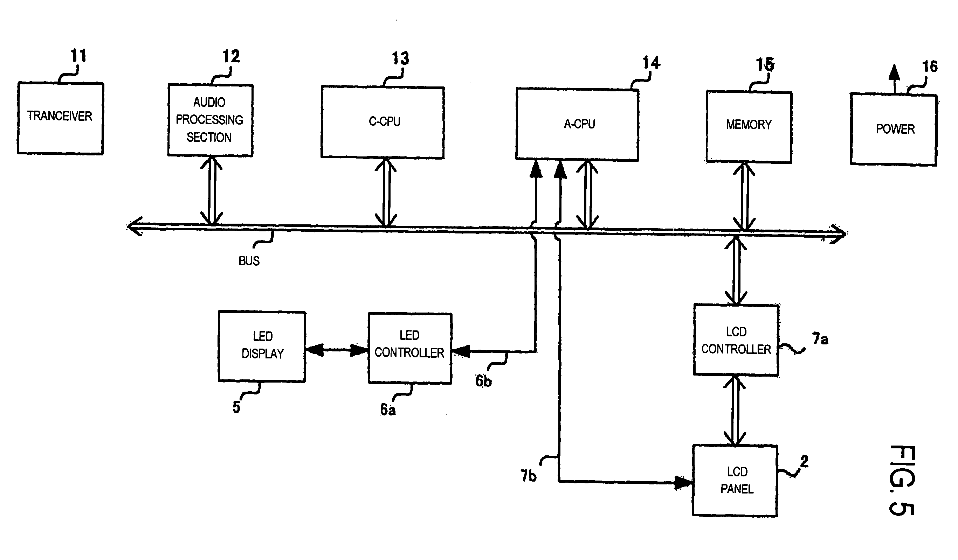

As an example, Fig. 5 is a block diagram showing the structure of the conventional portable telephone in which the signal line of an LCD controller 7 is connected to an A-CPU 14 through a bus line Bus and a notice of an incoming call is given.

The portable telephone in Fig. 5 comprises a transmitting/receiving section 11 for transmitting/receiving data through an antenna, an audio processing section 12 for processing a voice signal, a communication CPU (hereinafter referred to as a C-CPU) 13 for mainly processing the communicating function of the portable telephone, an application CPU (hereinafter referred to as an A-CPU) 14 for mainly carrying out the display processings of an LCD panel 2 and an LED display 5 and the processing of an image photographed by a camera (not shown) depending on a type of a device, a memory 15, and a power source 16 for supplying a power to each component. Bus denotes a bus line. The memory 15 has a volatile memory including a static RAM to function as a work memory, and a nonvolatile memory including a flash memory for storing fixed information such as a telephone number and a mail address.

Moreover, the A-CPU 14 controls an LED for a backlight of the LCD panel 2 and the LED display 5 for an incoming call display through signal lines 7b and 6b via another route separately from the display control of the LCD panel 2. These LEDs are controlled from the serial I/O port of the A-CPU 14 by a 3-line serial method, for example, respectively.

In the conventional portable telephone, when an incoming call arrives, the A-CPU 14 transmits graphic screen data for giving a notice of the incoming call to an LCD controller 7a and displays the graphic screen on the LCD panel 2. At the same time, the A-CPU 14 turns on the LED for a backlight of the LCD panel 2 and controls the lighting state of an LED for an incoming call display of the LED display 5 through an LED controller 6a.

Consequently, the owner of the portable telephone confirms that the incoming call arrives based on the graphic screen of the LCD panel 2 and the lighting state of the LED for an incoming call display.

In the folding portable telephone having a camera, thus, the signal line is provided between the A-CPU 14 and the camera 3 in addition to the signal lines provided between the A-CPU 14 and the LCD controller 7 and LED controller 8. Consequently, the wire harness of the folding section C is increased and the structure has a drawback.

Moreover, an image photographed by the camera 3 is monitored by the LCD panel 2. For this purpose, it is necessary to update an image at a refresh rate having a certain high speed (for example, 15 frames/second). The number of pixels of the camera 3 is thirty and several thousands, for example, and the display screen of the LCD panel 2 is 176 by 220 and is displayed in a full color. Accordingly, the A-CPU 14 takes a great processing burden for receiving and processing the photographed image data from the camera 3 and transmitting the display image data to the LCD controller 7, and furthermore, requires a buffer memory. In addition, a high-speed signal (a clock or image data) passes through the wire harness of the folding section C. For this reason, there is a problem in that power consumption is increased by the capacitive load of the wire harness.

Furthermore, a recent portable telephone has carried out a finer processing, for example, the display of the arrival of an incoming call causes the graphic screen of an LCD panel to be changed more quickly, for example, or the lighting state of an LED for an incoming call display changes a tone with the passage of time in a full color.

For this reason, the A-CPU 14 for carrying out display control is to update data for a graphic depending on the speed of a change in the graphic screen when an incoming call arrives, and to supply the data thus updated to the LCD controller, and furthermore, to switch an address to be accessed from a memory address to the address of a serial I/O and to supply control data on three components of a red color (R), a green color (G) and a blue color (B) (for example, PWM control data)to an LED for an incoming call display in order to change the LED for an incoming call display in the tone of a full color almost simultaneously.

Thus, the A-CPU 14 has taken a heavier processing burden for finely carrying out a display when the incoming call arrives. For this reason, an enhancement in a throughput has been required, for example, a CPU having a higher speed is to be employed.

In the example of Fig. 5, moreover, the A-CPU 14 individually controls the LED for a backlight of the LCD panel 2 and the LED display 5 for an incoming call display through another route. For this reason, there is also a problem in that the I/O port of the A-CPU 14 is exclusively possessed due to the display data.

### SUMMARY OF THE INVENTION

Therefore, it is an object of the invention to provide a folding portable apparatus having a display section which can decrease the number of the signal lines of a folding section C to simplify a wire harness and can reduce power consumption for a display processing, and can reduce the burden of the CPU of a body section.

It is another object of the invention to provide a communicating device such as a portable telephone in which the burden of a CPU for processing incoming call control is relieved to give a notice of an incoming call in a plurality of different configurations when the incoming call arrives, and furthermore, the number of ports to be possessed exclusively by the CPU to carry out the incoming call control is decreased.

A first aspect of the invention is directed to a portable communicating apparatus comprising a display section having a display unit, a body section having a signal processing device including a CPU, and a connecting section for relatively displacing the display section and the body section, wherein the display section further has image input means, and image processing means for receiving image data from the image input means, carrying out an image processing and supplying display image data to the display unit, and transmission of data between the signal processing device and the image processing means via the connecting section is enabled only when the data includes image data.

Thus, the image processing means for collecting image processing functions is provided in the display section and a signal transfer between the image input means (a camera) and the display unit (a display panel) can be directly carried out without using the signal processing device (CPU) of the body section. Consequently, the wire harness of a connecting section C can be small-sized, and furthermore, data having a high speed passing through the wire harness of the folding section C are lessened. Accordingly, it is possible to reduce a power consumed by a capacitive load.

Only in the case in which the data including the image data are to be supplied between the body section and the display section, moreover, the data can be transmitted and received therebetween. Consequently, the image data can be transmitted/received and displayed without a hindrance.

Moreover, a second aspect of the invention is directed to a portable communicating apparatus having display panel means, incoming call informing means, display data storage means for writing and reading screen display data including incoming call image data and first incoming call arrival data for controlling a display of the incoming call image data which are to be displayed on the display panel means, information data storage means for writing and reading information data including second incoming call arrival data which are to be supplied to the incoming call informing means, and control processing means for controlling to write or read the screen display data and the information data to or from the display data storage means and the information data storage means, wherein an address of the screen display data to be stored in the display data storage means and an address of the information data to be stored in the information data storage means are allocated as a continuous address over an address space.

According to the communicating apparatus, the screen display data and the information data which are to be stored in the storage means of different types are stored in continuous addresses. Therefore, the control processing means can process the data as serial incoming call arrival data. Accordingly, the processing step of the control processing means can be relieved more greatly by address switching than that in the conventional art.

In the case in which the first incoming call arrival data and the second incoming call arrival data are adjacent to each other over the address space, moreover, a screen display such as a graphic at time of the arrival of an incoming call over the display panel means and information at time of the arrival of the incoming call to the incoming call informing means can easily be controlled synchronously.

Furthermore, the control of the incoming call informing means is not carried out through another route separately from the control processing means but in the same manner as the control for the display panel means. Consequently, the number of ports to be possessed exclusively by the control processing means in order to carry out the incoming call control is decreased.

### BRIEF DESCRIPTION OF THE DRAWINGS

Fig. 1 is a diagram showing the structure of the system of a folding portable telephone according to an embodiment of the invention,
Fig. 2 is a diagram showing an example of the allocation of an address to a plurality of storage means,
Fig. 3 is a view showing the appearance of the folding portable telephone to which the invention is applied,
Fig. 4 is a diagram showing the structure of the system of a conventional folding portable telephone, and
Fig. 5 is a block diagram showing another structure of the conventional portable telephone.

### DESCRIPTION OF THE PREFERRED EMBODIMENTS

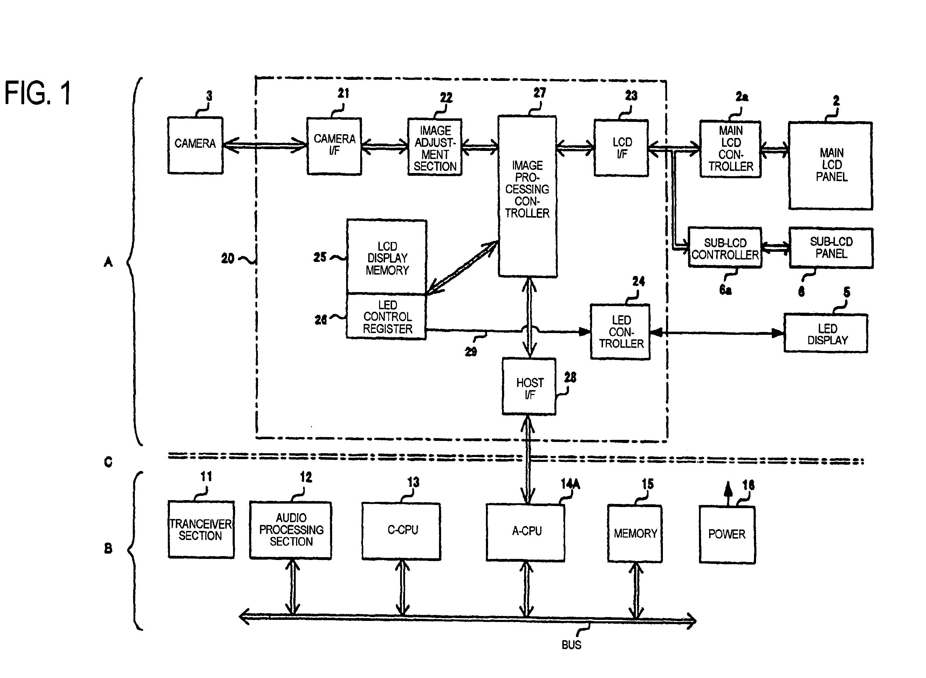

As an example, a portable telephone according to a first embodiment of the invention will be described below with reference to a diagram showing the structure of a system in Fig. 1 and a view showing an appearance in Fig. 3.

In Fig. 1, a portable telephone is constituted by an LCD panel side section A, a body section B and a folding section C for foldably connecting them, and an appearance thereof is the same as that of the conventional portable telephone shown in Fig. 3.

The body section B comprises a transmitting/receiving section 11 for transmitting/receiving data through an antenna 5, an audio processing section 12 for processing a voice signal, a C-CPU 13 for mainly processing the communicating function of a portable telephone, an A-CPU 14A for mainly carrying out the display processings of an LCD panel 1 and an LED display 2 and the processing of an image photographed by a camera 3, a memory 15, and a power source 16 for supplying a power to each component. Bus denotes a bus line. Moreover, the memory 15 has a volatile memory including a static RAM to function as a work memory, and a nonvolatile memory including a flash memory for storing fixed information such as a telephone number and a mail address.

In the invention, however, an LCD panel side section A is mainly provided with an image processing LSI 20 in addition to an LCD panel 2, a main LCD controller 2a, a sub LCD panel 6, a sub LCD controller 6a, a camera 3 and an LED display 5 as shown in Fig. 1 differently from the conventional internal structure.

The image processing LSI 20 is image processing means collecting image processing functions and is constituted to include the following components. For the image processing LSI 20, suitably, LSI chips are formed for each component or by related components and are integrated to be a system LSI, and the system LSI is packaged.

First of all, there are provided a camera I/F 21 for interfacing (hereinafter referred to as I/F) with the camera 3 and an image adjustment section 22 for carrying out an image adjustment such as a size reduction processing, a size cut-out processing and a luminance component and dynamic range change processing over photographed image data passing through the camera I/F 21.

Moreover, there are provided an LCD I/F 23 for carrying out X/F with the LCD panels 2 and 6 sides and an LED controller 24 for the LED display 5. The LCD panels 2 and 6 include an LCD driver, and furthermore, can include main and sub LCD controllers 2a and 6a respectively. To the contrary, the main and sub LCD controllers 2a and 6a may be provided in the LSI 20. Moreover, the LED display 5 includes an LED driver, and furthermore, the LED controller 24 can be removed from the LSI 20 and can be included in the LED display 5.

Furthermore, there are provided an LCD display memory 25 to be used as a frame buffer or a display control memory which stores a camera image and a fixed frame image for an LCD display, and an LED control register 26 for storing data to control the LED display 5. The LCD display memory 25 is constituted by an RAM.

An image processing controller 27 is connected to each of the component applications, and furthermore, is connected to the A-CPU 14A of the body section B through the host I/F. Photographed image data transmitted from the camera 3 are subjected to an image adjustment and are stored in the LCD display memory 25, and the image data thus stored are read and are displayed on the LCD panel 2 directly (that is, without using the A-CPU) at a predetermined update rate. In the write/read to/from the LCD display memory 25, an access is given in a hardware configuration by a direct memory access (DMA) method without the processing of a CPU.

Moreover, the image processing controller 27 transmits the image data stored in the LCD display memory 25 in static image data to the A-CPU 14A. The static image data are transmitted to a communication partner through the transmitting/receiving section 11. To the contrary, the static image data transmitted from the communication partner are stored in the LCD display memory 25 and are displayed on the LCD panel 2.

Moreover, the image processing controller 27 receives display data for the LED display 5 and a control signal from the A-CPU 14 through the host I/F 28 and stores them in the LED control register 26. The display data thus stored are read from the LED control register 26 and are directly supplied to the LED controller 24 through a signal line 29. The LED display 5 is ON/OFF controlled in accordance with the display data.

On the other hand, the body section B is provided with the A-CPU 14A. Differently from the conventional A-CPU 14, the A-CPU 14A does not carry out an image processing to be performed by the image processing LSI 20, for example, an image processing such as the image adjustment of photographed image data or the update of an image at a high-speed rate of the photographed image data. The A-CPU 14A carries out a processing of transmitting a comparatively low speed signal such as the display data for the LED display 5 or a control signal to the LCD panel side section A and transmitting image data (static image data) from the LCD panel side section A to the transmitting/receiving section 11, and furthermore, transmitting a signal such as the image data (static image data) received through the transmitting/receiving section 11 to the LCD panel side section A. The A-CPU 14A and the LCD panel side section A may be connected through the bus line Bus.

Description will be given to the operation of the folding portable telephone in Fig. 1. In the case in which an object is to be photographed by the camera 3, first of all, a photographing instruction is sent from the A-CPU 14A to the image processing controller 27 and the photographing is started by the camera 3. The photographed image data converted into digital data in the camera 3 are subjected to a predetermined adjustment by the image adjustment section 22 and are stored in the LCD display memory 25. The image data stored in the LCD display memory 25 are read and displayed on the LCD panel 2. The storage in the LCD display memory 25 and the display on the LCD panel 2 are carried out under control of the image processing controller 27. The image data are updated at a certain high-speed rate (for example, 15 frames/second) in order to carry out monitoring by the LCD panel 2.

In the photographing to be carried out by the camera 3 and the display on the LCD panel 2, the processing of the image data to be updated at a high speed is performed only in the image processing LSI 20 including the LCD display memory 25 and the image processing controller 27. More specifically, the A-CPU 14A rarely takes a burden of the image data processing when the same processing is to be carried out.

In this case, the folding section C does not require a signal line for reciprocating image data from the camera to the A-CPU and from the A-CPU to the LCD panel differently from the conventional art. Consequently, the number of the signal lines can be decreased so that the wire harness of the folding section C can be reduced.

Next, in the case in which an image photographed by the camera 3 and displayed on the LCD panel 2 is to be transmitted to a communication partner, a transmitting instruction signal is sent from the A-CPU 14A to the image processing controller 27 when an image to be transmitted is displayed on the LCD panel 2, and image data obtained at that time are sent to the A-CPU 14A and are then transmitted to the communication partner. The image thus transmitted is a static image.

In the case in which the image data are transmitted from the communication partner, subsequently, the purport is given to the image processing controller 27 and the image is displayed on the LCD panel 2. The image thus received is also a static image.

While data to be transmitted between the A-CPU 14A and the image processing controller 27 are static images in all directions, they do not need to be the static images. For example, the data may be an image having a low update rate of 10 frames/s or less. Also in this case, the same effects can be obtained. This respect is the same as in the following description.

Thus, the data to be transmitted between the A-CPU 14A and the image processing controller 27 through the host I/F 28 are static images in all the directions. Differently from the conventional art, therefore, an image to be updated at a high-speed rate for monitoring does not need to be transmitted through the wire harness of the folding section C. Accordingly, power consumption can be prevented from being increased by the capacitive load of the wire harness of the folding section C. Only in the case in which data including static image data are to be supplied between the body section B and the LCD panel side section A, moreover, the data transmitting and receiving function therebetween is enabled. Consequently, it is possible to precisely transmit/receive and display the image data without a hindrance.

Furthermore, the LED display 5 and the sub LCD panel 6 display incoming call information, a mail receipt, a date and a time depending on the incoming call in accordance with an instruction sent from the A-CPU 14A.

While the description has been given on the assumption that the LCD display panel is used as the display panel, moreover, it is not restricted but a portable apparatus can be constituted in the same manner by using another display device such as an organic E/L display panel.

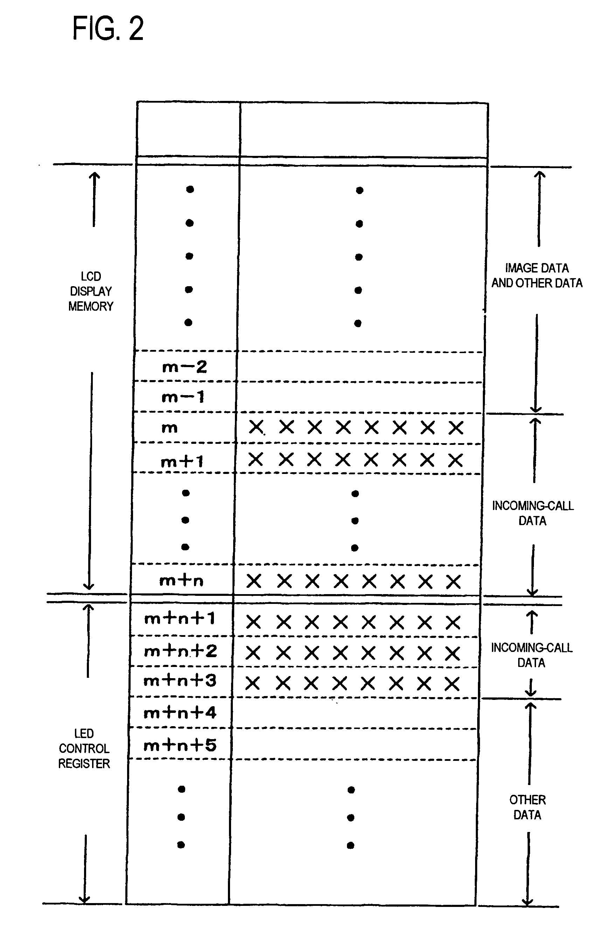

Next, a second embodiment of the invention will be described with reference to Figs. 1 and 2. Description will be given to a view showing an appearance by taking Fig. 3 as an example. Referring to Fig. 1, first of all, there are provided an LCD display memory 25 to be screen display data storage means which is constituted by an RAM and is used as a frame buffer or a display control memory for storing, for an LCD display, a camera image, a fixed frame image and a graphic image in an incoming call, and an LED control register 26 to be information data storage means for storing data to control an LED display 2 provided with an LED for displaying incoming call information, a mail receipt and a charging state. By such a structure, the display of the arrival of the incoming call causes the LCD panel 1 to display a graphic image or an LED (R, G and B) for an incoming call of the LED display 2 to change the tone of a full color (for example, PWM control or ON/OFF control). Consequently, the display data are updated corresponding to the change.

The structure features that an address is allocated to regard the LCD display memory 25 and the LED control register 26 to be one storage means in storage control. In other words, the address of the memory of incoming call image data for a graphic display screen for the arrival of an incoming call which are to be stored in the LCD display memory 25 and the address of the register of control data to be stored in the LED control register 26 are caused to be almost continuous. More specifically, they are adjacent to each other over a common address space.

Moreover, the image processing controller 27 receives, through the host I/F 28, image data for the LCD panel 1 such as a graphic image in the arrival of an incoming call which is sent from the A-CPU 14A, display data for the LED display 2, and a control signal, and stores them in the LCD display memory 25 and the LED control register 26 respectively. The image data thus stored are read from the LCD display memory 25 and are displayed on the LCD panel 1. Moreover, the display data are read from the LED control register 26 and are directly supplied to the LED controller 24 through the signal line 29. The LED display 2 is ON/OFF controlled in accordance with the display data.

Description will be given to an operation according to the second embodiment of the folding portable telephone in Fig. 1. The LCD display memory 25 and the LED control register 26 are storage means of different types, respectively. Usually, a memory address forms a serial address space. In the invention, an address is allocated to the LCD display memory 25 and the LED control register 26 to have an almost continuous address (space) in display storage control.

Fig. 2 shows an example of the allocation of the address to the LCD display memory 25 and the LED control register 26. As shown in Fig. 2, the address of the LCD display memory 25 and that of the LED control register 26 are allocated in the same format without overlapping.

In this example, addresses are allocated up to [m + n] to the LCD display memory 25 and a subsequent address [m + n + 1] and thereafter are allocated to the LED control register 26. Data on the arrival of an incoming call to be transmitted to the LCD display memory 25 are allocated to addresses [m] to [m + n] and data on the arrival of the incoming call to be transmitted to the LED control register 26 are allocated to addresses [m + n + 1] to [m + n + 3].

Following the address of the incoming call image data for the graphic display screen for the arrival of the incoming call which are to be stored in the LCD display memory 25, thus, the address of control data to be stored in the LED control register 26 is allocated. The order of the allocation and an address value can be optionally set and changed. It is sufficient that the address of the data to be stored in the LCD display memory 25 and the address of the data to be stored in the LED control register 26 are adjacent to each other over the common address space when the incoming call arrives.

In many cases, the size of the graphic image obtained in the arrival of the incoming call is a part of the LCD display panel 1. In these cases, the data on the arrival of the incoming call are stored in only a portion corresponding to the portion to be also displayed on the LCD display memory 25. Moreover, other image data and control data are stored in the other addresses of the LCD display memory 25 and the LED control register 26.

Consequently, it is possible to treat the data required in the arrival of the incoming call as a collective data group by specifying at least a head address irrespective of the storage means for storing the same data.

When an incoming call is generated in the portable telephone, graphic image data in the arrival of the incoming call and control data in the arrival of the incoming call are sequentially transmitted as one data group from the A-CPU 14A to the image processing controller 27. By referring to a starting address attached to the data group, the image processing controller 27 stores graphic image data included in the data group in the addresses [m] to [m + n] of the LCD display memory 25 and stores residual control data in the arrival of the incoming call in the addresses [m + n + 1] to [m + n + 3] of the LED control register 26 without switching the address.

The data on the arrival of the incoming call thus stored are read from the LCD display memory 25 through the image processing controller 27 and are supplied to the LCD panel 1 through the LCD controller 1a. Moreover, the same data are directly read from the LED control register 26 and are supplied to the LED for an incoming call of the LED display 2 through the LED controller 24.

The data on the arrival of the incoming call are successively updated into new data from the A-CPU 14A in order to correspond to the graphic image or a predetermined change in the tone of the LED for an incoming call. The data on the incoming call thus updated are supplied to the LCD panel 1 and the LED display 2 so that an image and a display state are varied.

It is necessary to synchronously carry out the display of the LCD panel 1 and the LED display 2 when the incoming call arrives. In the invention, however, the graphic image data on the LCD panel side in the arrival of the incoming call and each of the control data in the arrival of the incoming call for the LCD panel and the LED display are sequentially updated as one data group extending over two storage means. Consequently, the display can easily be synchronized. The display in the arrival of the incoming call ends when an incoming call confirming operation is completely carried out.

In the case in which an object is to be photographed by the camera 3, moreover, a photographing instruction is sent from the A-CPU 14A to the image processing controller 27 and the photographing is started by the camera 3. The photographed image data converted into digital data in the camera 3 are subjected to a predetermined adjustment by the image adjustment section 22 and are stored in the LCD display memory 25. The image data stored in the LCD display memory 25 are read and displayed on the LCD panel 1. The storage in the LCD display memory 25 and the display on the LCD panel 1 are carried out under control of the image processing controller 27. The image data are updated at a certain high-speed rate (for example, 15 frames/second) in order to carry out monitoring by the LCD panel 1.

In the photographing to be carried out by the camera 3 and the display on the LCD panel 2, the processing of the image data to be updated at a high speed is performed only in the image processing LSI 20 including the LCD display memory 25 and the image processing controller 27. More specifically, the A-CPU 14A rarely takes a burden of the image data processing when the same processing is to be carried out.

In this case, the folding section C does not require a signal line for reciprocating image data from the camera to the A-CPU and from the A-CPU to the LCD panel. Consequently, the number of the signal lines can be decreased so that the wire harness of the folding section C can be reduced.

Next, in the case in which an image photographed by the camera 3 and displayed on the LCD panel 1 is to be transmitted to a communication partner, a transmitting instruction signal is sent from the A-CPU 14A to the image processing controller 27 when an image to be transmitted is displayed on the LCD panel 1, and image data obtained at that time are sent to the A-CPU 14A and are then transmitted to the communication partner. The image thus transmitted is a static image.

In the case in which the image data are transmitted from the communication partner, subsequently, the purport is given to the image processing controller 27 and the image is displayed on the LCD panel 1. The image thus received is also a static image.

Thus, the data to be transmitted between the A-CPU 14A and the image processing controller 27 through the host I/F 28 are static images in all the directions, Differently from the conventional art, therefore, an image to be updated at a high-speed refresh rate for monitoring does not need to be transmitted through the wire harness of the folding section C. Accordingly, power consumption can be prevented from being increased by the capacitive load of the wire harness of the folding section C. Only in the case in which data including static image data are to be supplied between the body section B and the LCD panel side section A, moreover, the data transmitting and receiving function therebetween is enabled. Consequently, it is possible to precisely transmit/receive and display the image data without a hindrance.

While the data to be transmitted between the A-CPU 14A and the image processing controller 27 are the static images in all directions in the above description, they do not need to be the static images but images having a low update rate of 10 frames/s or less, for example, or a low transmission speed. Also in the case in which the display of the LED display 2 is to be controlled corresponding to the update of the image, it is also possible to apply the display storage control method according to the invention in which image data and information data to be stored in storage means of different types are stored in almost adjacent addresses. Also in this case, since the address does not need to be switched, a processing can be correspondingly carried out quickly. Consequently, the update rate of an image can be more enhanced than that in the conventional art. Thus, a smoother image can be displayed.

Moreover, a vibrator may be used for incoming call informing means and the address of a control register for the vibrator may be used in place of the address of the control register for an LED or together therewith to control a vibration state thereof.

While the description has been given on the assumption that the LCD display panel is used as the display panel, furthermore, it is not restricted but a portable telephone can also be constituted by using another display device such as an organic E/L display panel.

While the example of the folding portable telephone has been described, moreover, only the second embodiment of the invention can also be applied to portable telephones other than the folding portable telephone. In this case, the LED display 2 is provided on the same side as the LCD panel 1.

While only the portable telephone having the camera has been described above, moreover, the same effects can be expected even if the portable telephone does not have the camera.

According to the invention, the image processing means for collecting image processing functions is provided in the display section and a signal transfer between the image input means and the display unit can be directly carried out without using the signal processing device of the body section. Consequently, the wire harness of the folding section C can be small-sized, and furthermore, data having a high speed passing through the wire harness of the folding section are lessened. Accordingly, it is possible to reduce a power consumed by a capacitive load.

Only in the case in which the data including the image data are to be supplied between the body section and the display section, moreover, the data can be transmitted and received therebetween. Consequently, the image data can be transmitted/received and displayed without a hindrance.

According to the communicating apparatus of the invention, moreover, the incoming call image data and the incoming call information data to be stored in the storage means of different types are stored in adjacent addresses. Therefore, the control processing means can process the data as serial incoming call arrival data. Accordingly, the processing step of the control processing means can be relieved more greatly by address switching than that in the conventional art.

Moreover, a screen display such as a graphic in an incoming call over the display panel means and information of the incoming call to the incoming call informing means can easily be controlled synchronously.

Furthermore, the control of the incoming call informing means is not carried out through another route separately from the control processing means but in the same manner as the control for the display panel means. Consequently, the number of ports to be possessed exclusively by the control processing means in order to carry out the incoming call Control is decreased.

While the folding type in which the panel side section A and the body section B in Fig. 2 are opened and closed in the axial direction of the folding section C has mainly been described in the invention, it is apparent that the same advantages as those disclosed in the invention can also be expected for a communicating terminal having such a structure that relative displacement can be made for the body section and the panel side section which are moved around a connecting section being physically connected with them.

For example, concerning the structure as disclosed in this invention in which the panel side section has image input means and image processing means for receiving image data therefrom and carrying out an image processing and supplying display image data to the display unit, when such a structure is applied to a communicating terminal of a panel rotating type having such a structure that the panel side section can be rotated around a connecting section, connecting the panel side section and the body section,substantially in parallel with a horizontal plane constituted by a key surface on the key operating section side of the body section B, the substantially same advantages as those described in the invention can be obtained.

A display section A and a body section B including a CPU and serving to carry out a signal processing are connected to each other through a folding section C. The display section of a folding portable apparatus is provided with a display panel 2, a camera 8 and image processing means 27 for receiving photographed image data from the camera, carrying out an image processing and directly supplying display image data to the display section. In the case in which data including the image data are to be supplied from the body section to the display section or from the display section to the body section, a data transmitting/receiving function between the CPU and the image processing means is enabled.

## Claims

1. A portable communicating apparatus comprising a display section having a display unit, a body section having a signal processing device including a CPU, and a connecting section for relatively displacing the display section and the body section,
wherein the display section is further comprised of image input means, and image processing means for receiving image data from the image input means, carrying out an image processing and supplying display image data to the display unit, and further wherein
transmission of data between the signal processing device and the image processing means via the connecting section is enabled only when the data includes image data.

2. A portable communicating apparatus comprising a display section having a display unit, a body section having a signal processing device including a CPU, and a folding section for foldably connecting the display section to the body section,
wherein the display section is further comprised of image input means, and image processing means for receiving image data from the image input means, carrying out an image processing and supplying display image data to the display unit, and further wherein
transmission of data between the signal processing device and the image processing means via the connecting section is enabled only when the data includes image data.

3. The portable communicating apparatus according to claim 1 or 2, wherein the image data are image data having a relatively low image refresh rate in the display data.

4. The portable communicating apparatus according to claim 1 or 2, wherein the image data are image data having a relatively low image transmission speed in the display data.

5. A portable communicating apparatus having display panel means, incoming call informing means, display data storage means for writing and reading screen display data including incoming call image data and first incoming call arrival data for controlling a display of the incoming call image data which are to be displayed on the display panel means, information data storage means for writing and reading information data including second incoming call arrival data which are to be supplied to the incoming call informing means, and control processing means for controlling to write or read the screen display data and the information data to or from the display data storage means and the information data storage means, wherein an address of the screen display data to be stored in the display data storage means and an address of the information data to be stored in the information data storage means are allocated as a continuous address over an address space.

6. The portable communicating apparatus according to claim 5, wherein the incoming call informing means is constituted by an LED.

7. The portable communicating apparatus according to claim 5, wherein the incoming call informing means is constituted by a vibrator.

8. The portable communicating apparatus according to claim 5, wherein the incoming call informing means is constituted by an LED and a vibrator.

9. The portable communicating apparatus according to claim 5, wherein the first incoming call arrival data and the second incoming call arrival data are adjacent to each other over an address space.
